# EUROPÄISCHE PATENTANMELDUNG

(11) **EP 4 292 773 A1**
(43) Veröffentlichungstag der Anmeldung: **20.12.2023**
(21) Anmeldenummer: 22179633.7
(22) Anmeldetag: 17.06.2022
(51) Int. Cl.: B25J 9/16

(54) **SYSTEM UND VERFAHREN ZUR KONZEPTION EINES PRODUKTIONSPROZESSES**

(71) Anmelder: Siemens Aktiengesellschaft, 80333 München (DE)
(72) Erfinder: Deroo, Frederik, 85399 Hallbergmoos (DE); Fiegert, Michael, 81739 München (DE)
(74) Vertreter: Siemens Patent Attorneys

(57) **Zusammenfassung**

Die vorliegende Erfindung betrifft eine automatische Erstellung von funktionellen Beschreibungen für Aufnahmeelemente eines Produktionsprozesses, in welchem ein Roboterarm einzelne Komponenten greifen und ablegen kann. Die funktionellen Beschreibungen werden hierbei automatisiert unter Verwendung von zuvor generierten Prozessbeschreibungen erstellt. Insbesondere können die Aufnahmeelemente auf Grundlage der erstellten Beschreibungen automatisiert hergestellt werden.

## Beschreibung

### Technisches Gebiet

Die vorliegende Erfindung betrifft ein System sowie ein Verfahren zur Konzeption eines Produktionsprozesses. Insbesondere betrifft die vorliegende Erfindung die Konzeption eines Produktionsprozesses, bei welchem mindestens eine Komponente mittels eines Roboters bewegt wird.

### Hintergrund

In zahlreichen modernen Produktionsanlagen findet eine zunehmende Automatisierung statt. Hierbei können beispielsweise bei der Herstellung eines Produktes einzelne Komponenten des Produktes oder das fertige Endprodukt selbst mittels eines Roboterarms gegriffen und bewegt werden. Auf diese Weise können die entsprechenden Bauteile bewegt, bearbeitet oder zusammengefügt werden. Dabei werden die einzelnen Komponenten beispielsweise zunächst an einer Startposition von dem Roboterarm gegriffen, anschließend eventuell abgelegt und erneut gegriffen und am Ende das fertige Produkt an einer Endposition abgelegt.

Für das Ablegen der Komponenten bzw. des Endproduktes, sowie auch gegebenenfalls für das Bereitstellen der Ausgangskomponenten können hierzu geeignete Halterungen vorgesehen sein. Diese Halterungen sind in der Regel derart ausgestaltet, dass der Roboterarm die jeweilige Komponente hieraus aufnehmen und/oder darin ablegen kann. Im weiteren Verlauf der Beschreibung werden diese Halterungen als Aufnahmen bezeichnet.

Im Rahmen der Planung eines Produktionsprozesses ist es dabei erforderlich, nicht nur die einzelnen Produktionsschritte und die Bewegungen des Roboterarm zu konzipieren, sondern auch die in diesem Zusammenhang erforderlichen Halterungen bzw. Aufnahmen zu spezifizieren. Hierzu ist in der Regel ein spezielles Fachwissen des mit der Planung betrauten Benutzers erforderlich.

Vor diesem Hintergrund ist es wünschenswert, den Benutzer bei der Planung bzw. Konzeption der Aufnahmen für die Komponenten, die während des Produktionsprozesses erforderlich sind, zu unterstützen. Insbesondere ist es wünschenswert, dem Benutzer automatisiert Daten bereitzustellen, auf deren Grundlage die Auswahl bzw. das Design der erforderlichen Aufnahmen in einfacher Weise ausgeführt werden können.

### Offenbarung der Erfindung

Die vorliegende Erfindung schafft ein System und ein Verfahren zur Konzeption eines Produktionsprozesses mit den Merkmalen der unabhängigen Patentansprüche. Weitere vorteilhafte Ausführungsformen sind Gegenstand der abhängigen Patentansprüche.

Gemäß einem ersten Aspekt ist ein System zur Konzeption eines Produktionsprozesses vorgesehen. Bei diesem Produktionsprozess wird insbesondere mindestens eine Komponente mittels eines Roboters bewegt. Das System umfasst eine Eingabeeinrichtung und eine Verarbeitungseinrichtung. Die Eingabeeinrichtung ist dazu ausgelegt, Produktionsdaten zu empfangen. Diese Produktionsdaten können einen Produktionsablauf spezifizieren. Insbesondere umfassen die Produktionsdaten Informationen, die ein Greifen von Komponenten durch den Roboter während des Produktionsprozesses beschreiben. Die Verarbeitungseinrichtung ist dazu ausgelegt, unter Verwendung der Produktionsdaten eine funktionelle Beschreibung für eine Aufnahme einer Komponente zu ermitteln. Weiterhin ist die Verarbeitungseinrichtung dazu ausgelegt, die ermittelte funktionelle Beschreibung für die Aufnahmen der Komponente auszugeben. Gemäß einem weiteren Aspekt ist ein Verfahren zur Konzeption eines Produktionsprozesses vorgesehen. Bei dem Produktionsprozess kann mindestens eine Komponente mittels eines Roboters bewegt werden. Das Verfahren umfasst einen Schritt zum Empfangen von Produktionsdaten. Diese Produktionsdaten spezifizieren einen Produktionsablauf. Insbesondere umfassen die Produktionsdaten Informationen, die ein Greifen von Komponenten durch den Roboter während des Produktionsprozesses beschreiben. Weiterhin umfasst das Verfahren einen Schritt zum Ermitteln einer funktionelle Beschreibung für eine Aufnahmen einer Komponenten unter Verwendung der Produktionsdaten, und einen Schritt zum Ausgeben der ermittelten funktionelle Beschreibung für die Aufnahme einer Komponente.

Der vorliegenden Erfindung liegt die Erkenntnis zugrunde, dass bei Produktionsprozessen, die unter Verwendung eines Roboters bzw. Roboterarms erfolgen, einzelne Komponenten an vorgegebenen Positionen aufgenommen, gegebenenfalls zwischendurch abgelegt und neu aufgenommen und am Ende an einer vorgegebenen Endposition abgelegt werden sollen. Hierbei sind für das Aufnehmen und Ablegen der Komponenten in der Regel geeignete Aufnahmen für die Komponenten erforderlich. Diese Aufnahmen müssen in der Regel für jeden Produktionsprozess individuell spezifiziert werden. Dies erfordert einen nicht zu vernachlässigenden Aufwand und ein hohes Fachwissen des beteiligten Benutzers.

Es ist daher eine Idee der vorliegenden Erfindung, dieser Erkenntnis Rechnung zu tragen und ein System sowie ein Verfahren zur Konzeption eines Produktionsprozesses zu schaffen, bei welchem der Benutzer auf automatisierte Weise bei der Planung, dem Design und der Fertigung der erforderlichen Aufnahmen von Komponenten unterstützt werden kann. Hierdurch kann die Planung des Herstellungsprozesses vereinfacht und beschleunigt werden, mögliche Fehlerquellen können eliminiert werden und somit der Produktionsprozess sicherer gestaltet werden. Darüber kann durch eine solche automatisierte Spezifikation von Aufnahmen auch vermehrt auf potentielle Standardkomponenten als Aufnahmen zurückgegriffen werden, wodurch eine weitere Vereinfachung und Kosteneinsparung erzielt werden können.

Für die Spezifikation der erforderlichen Aufnahmen von Komponenten während des Produktionsprozesses können zunächst die Produktionsdaten ausgewertet werden, die den auszuführenden Produktionsablauf spezifizieren. Diese Produktionsdaten können zuvor in einem externen Verfahren manuell oder automatisiert erstellt worden sein. Das erfindungsgemäße Verfahren analysiert daraufhin diese Produktionsdaten, um zunächst Produktionsschritte zu identifizieren, bei welchen eine Komponente aufgenommen oder abgelegt werden soll. Daraufhin kann das Verfahren die Anforderungen für eine Aufnahme der jeweiligen Komponente für das Ablegen und/oder oder Aufnehmen ermitteln. Hierzu können beispielsweise Form, Größe, Gewicht, Oberflächenstruktur o.ä. der jeweiligen Komponente mit in Betracht gezogen werden. Darüber hinaus können auch weitere Rahmenbedingungen, wie beispielsweise Eigenschaften des Roboters bzw. Roboterarms, Möglichkeiten des Roboters zum Greifen der Komponente, der verfügbare Bauraum in der Produktionsanlage sowie weitere Randbedingungen mitberücksichtigt werden. Insbesondere können auch Anforderungen an die Präzision bzw. Genauigkeit spezifiziert werden, mit welcher die jeweilige Komponente aufgenommen bzw. abgelegt werden soll.

Aus diesen und gegebenenfalls auch weiteren Anforderungen kann daraufhin automatisiert eine funktionelle Beschreibung für eine erforderliche Aufnahme der Komponente generiert werden. Zum Beispiel kann diese funktionelle Beschreibung Angaben über die Belastbarkeit, die minimalen und/oder maximalen Abmessungen, die Ausrichtung der Aufnahme hinsichtlich der aufzunehmenden bzw. abzugebenden Komponente, Genauigkeitsanforderungen o. ä. umfassen. Ferner sind auch Angaben über eine Greifpose möglich, d.h. Angaben, wie eine Komponente von dem Roboter bzw. Roboterarm gegriffen werden soll. Grundsätzlich sind selbstverständlich auch beliebige andere Angaben zur funktionellen Beschreibung der erforderlichen Aufnahme einer Komponente möglich.

Die so ermittelten funktionellen Angaben zur Spezifikation einer Aufnahme können daraufhin ausgegeben werden. Die Ausgabe der Spezifikationen können beispielsweise das Bereitstellen der Informationen für einen Benutzer umfassen. Zum Beispiel können die Spezifikationen dem Benutzer während eines weiteren Planungsvorganges angezeigt werden. Zusätzlich oder alternativ ist es auch möglich, die funktionelle Beschreibung der Aufnahme zunächst in einem hierfür geeigneten Speicher abzuspeichern. Beispielsweise kann die funktionelle Beschreibung einer Aufnahme zusammen mit den zuvor generierten Produktionsdaten gemeinsam abgespeichert und für eine weitere Verarbeitung bereitgestellt werden. Darüber hinaus es auch möglich, die funktionelle Beschreibung für weitere automatisierte Schritte zur Planung des Produktionsprozesses und/oder für eine automatisierte Fertigung einer entsprechenden Aufnahme für eine Komponente bereitzustellen.

Gemäß einer Ausführungsform umfasst die funktionelle Beschreibung für die Aufnahmen der Komponente eine Beschreibung für eine Aufnahme zum Umgreifen einer Komponente durch den Roboter, eine Beschreibung für eine Aufnahme zur Anpassung der Position der Komponente, eine Beschreibung für eine Aufnahme zum Halten der Komponente an einer vordefinierten Position, und/oder eine Beschreibung für eine Aufnahme zum Halten der Komponente in einer vordefinierten Stellung. Bei einem Umgreifen einer Komponente kann die jeweilige Komponente zunächst in der entsprechenden Aufnahme abgelegt werden. Daraufhin kann derselbe Roboterarm oder ein weiterer Roboterarm die Komponente aus dieser Aufnahme wieder herausnehmen. Hierbei kann bei dem Herausnehmen die Komponente insbesondere an anderen Stellen gegriffen werden, als dies zuvor beim Ablegen der Fall war.

Eine Aufnahme zum Anpassen der Position einer Komponente kann es beispielsweise ermöglichen, dass eine zuvor gegebenenfalls nur ungenau gegriffene Komponente in einer solchen Aufnahme abgelegt wird, wobei während des Ablegens der Komponente die entsprechende Komponente sehr präzise an eine vorgegebene Position gebracht werden kann. Zum Beispiel kann dies durch eine schräge Ebene erreicht werden, wobei die Komponente nach dem Loslassen automatisch auf der schrägen Ebene an eine definierte Position rutscht. Anschließend kann die Komponente an dieser definierten Position sehr präzise wieder aufgenommen werden. Selbst verständlich sind auch beliebige andere Lösungen zum präzisen Bereitstellen einer Komponente möglich.

Eine Aufnahme zum Halten einer Komponente an einer vordefinierten Position kann beispielsweise dazu genutzt werden, die Komponente von einem Roboterarm an dieser Position aufzunehmen oder abzulegen. Beispielsweise kann auf diese Weise das fertige Endprodukt an einer genau definierten Position bereitgestellt werden.

Eine Aufnahme zum Halten einer Komponente in einer vordefinierten Stellung ermöglicht beispielsweise das Bereitstellen der jeweiligen Komponente in einer genau definierten Ausrichtung. Zum Beispiel kann auf diese Weise die jeweilige Komponente für weitere Produktionsschritte bereitgestellt werden. Beispielsweise kann eine Komponente durch eine solche Aufnahme derart gehalten werden, dass eine Bearbeitung der Komponente durch externe Maschinen möglich ist. Zum Beispiel kann während des Bereitstellens einer Komponente in einer vorbestimmten Stellung durch eine Bohrmaschine o. ä. eine Bohrung in die Komponente eingebracht werden.

Gemäß einer Ausführungsform ist die Verarbeitungseinrichtung dazu ausgelegt, die funktionelle Beschreibung für eine Aufnahmen einer Komponente zusammen mit den empfangenen Produktionsdaten einem Benutzer bereitzustellen. Das Bereitstellen kann beispielsweise durch Anzeigen der Daten auf einem Bildschirm oder auch durch gemeinsames Abspeichern der Produktionsdaten mit der funktionellen Beschreibung für die Aufnahmen erfolgen. Auf diese Weise stehen einem Benutzer die ermittelten funktionellen Beschreibungen für die Aufnahmen in komfortabler Weise zur Verfügung und können so während der weiteren Planung des Produktionsablaufs genutzt werden.

Gemäß einer Ausführungsform ist die Verarbeitungseinrichtung dazu ausgelegt, eine räumliche Position für die Aufnahme der Komponente zu ermitteln. Die räumliche Position kann insbesondere unter Verwendung der zuvor empfangenen Produktionsdaten ermittelt werden. Auf diese Weise kann zusammen mit der funktionellen Beschreibung der Aufnahme auch eine Angabe über geeignete räumliche Positionen der jeweiligen Aufnahme im Produktionsraum spezifiziert werden. Dies erleichtert die weitere Planung des Produktionsablaufs.

Gemäß einer Ausführungsform umfasst das System eine Speichereinrichtung. Die Speichereinrichtung ist dazu ausgelegt, Spezifikationen für Aufnahmen von Komponenten zu speichern und bereitzustellen. Die Spezifikationen für Aufnahmen von Komponenten können bereits zuvor ermittelt werden und in beliebiger geeigneter Weise daraufhin in der Speichereinrichtung abgespeichert werden. Die Verarbeitungseinrichtung ist hierbei dazu ausgelegt, die in der Speichereinrichtung gespeicherten Spezifikationen auszulesen. Weiterhin ist die Verarbeitungseinrichtung dazu ausgelegt, Spezifikationen für eine Aufnahme auszuwählen, die den Anforderungen der ermittelten funktionellen Beschreibung für die Aufnahme der Komponente entsprechen. Hierdurch können sehr einfach Spezifikationen von geeigneten Aufnahmen ermittelt werden, welche die Anforderungen der zuvor ermittelten funktionellen Beschreibung für eine Aufnahme erfüllen.

Gemäß einer Ausführungsform ist die Verarbeitungseinrichtung dazu ausgelegt, Konstruktionsdaten zur Herstellung einer Aufnahme für eine Komponente zu generieren. Die Konstruktionsdaten können insbesondere unter Verwendung der zuvor ermittelten funktionellen Beschreibung für die Aufnahme der Komponente generiert werden. Somit kann die Automatisierung der Planung des Produktionsprozesses weiter vorangetrieben werden, in dem bereits die vollständigen Konstruktionsdaten für eine geeignete Aufnahme automatisiert generiert werden.

Gemäß einer Ausführungsform umfasst das System eine Ausgabeschnittstelle. Die Ausgabeschnittstelle ist dazu ausgelegt, die ermittelte funktionelle Beschreibung für die Aufnahme der Komponente und/oder der generierten Konstruktionsdaten zur Herstellung der entsprechenden Aufnahme auszugeben. Hierdurch können die entsprechenden Daten elektronisch, insbesondere in digitaler Form, weiteren Systemen bereitgestellt werden.

Gemäß einer Ausführungsform umfasst das System eine Fertigungseinrichtung. Die Fertigung ist dazu ausgelegt, eine Aufnahme für die Komponente zu fertigen. Insbesondere kann die Aufnahme für die Komponente unter Verwendung der ermittelten funktionellen Beschreibung für die Aufnahmen der Komponente und/oder der generierten Konstruktionsdaten zur Herstellung der entsprechenden Aufnahme gefertigt werden. Auf diese Weise kann ausgehend von den bereitgestellten Produktionsdaten automatisch eine geeignete Aufnahme hergestellt werden, die in dem Produktionsprozess eingesetzt werden kann.

Gemäß einer Ausführungsform umfasst die Fertigungseinrichtung einen 3D-Drucker. Zusätzlich oder alternativ kann die Fertigungseinrichtung auch eine CNC-Maschine umfassen. Darüber hinaus sind grundsätzlich auch beliebige andere Maschinen möglich, welche dazu geeignet sind, die zuvor automatisiert spezifizierten Aufnahmen einer Komponente herzustellen.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann auch Einzelaspekte als Verbesserungen oder Ergänzungen zu den jeweiligen Grundformen der Erfindung hinzufügen.

### Kurze Beschreibung der Zeichnungen

Weitere Merkmale und Vorteile der Erfindung werden nachfolgend anhand der Figuren erläutert. Dabei zeigen:
Fig. 1: eine schematische Darstellung eines Prinzipschaubildes eines Produktionsprozesses, wie er der vorliegenden Erfindung zugrunde liegt;
Fig. 2: eine schematische Darstellung eines Blockschaubildes eines Systems gemäß einer Ausführungsform;
Fig. 3: eine schematische Darstellung eines Blockschaubildes eines Systems gemäß einer weiteren Ausführungsform; und
Fig. 4: ein Ablaufdiagramm, wie es einem Verfahren gemäß einer Ausführungsform zugrunde liegt.

### Beschreibung von Ausführungsformen

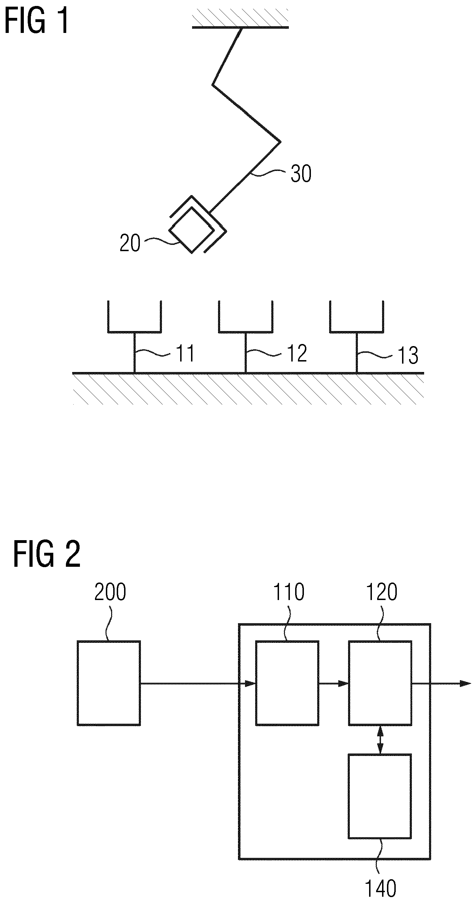

Figur 1 zeigt eine schematische Darstellung eines Prinzipschaubildes eines Produktionsprozesses, wie er der vorliegenden Erfindung zugrunde liegt. Beispielsweise können eine oder mehrere Ausgangskomponenten an entsprechenden Aufnahmen bzw. Halterungen 11 für den Produktionsprozess bereitgestellt werden. Ein Roboterarm 30 kann eine Komponente 20 aus einer solchen Aufnahme 11 aufnehmen, verschiedene Produktionsschritte durchführen und das fertige Produkt in einer Aufnahme 13 ablegen. Gegebenenfalls kann eine Komponente 20 während der Produktionsschritte in einer Aufnahme 12 abgelegt werden und daraufhin von demselben oder einem anderen Roboterarm 30 wieder aufgenommen werden. Da das Grundprinzip einer derartigen Fertigung mittels eines oder mehrerer Roboterarme 30 als bekannt angesehen wird, wird auf eine detailliertere Ausführung hier verzichtet.

Der hier dargestellte Produktionsprozess ist dabei jedoch lediglich schematisch zu verstehen und stellt keinerlei Einschränkung der vorliegenden Erfindung dar. Insbesondere sind auch mehrere Roboterarm 30 sowie eine von drei abweichende Anzahl von Aufnahmen 11 bis 13 möglich.

Bei der Planung des Produktionsablaufs ist neben der Spezifikation der einzelnen Produktionsschritte auch eine Planung und Fertigung der hierbei verwendeten Aufnahmen 11 bis 13 erforderlich. Hierzu wird nachfolgend eine System und ein Verfahren zur Konzeption des Produktionsprozesses beschrieben, insbesondere eine zumindest teilweise automatisierte Planung und gegebenenfalls Fertigung der erforderlichen Aufnahmen 11 bis 13.

Figur 2 zeigt eine schematische Darstellung eines Blockschaubildes eines Systems 100 zur Konzeption eines Produktionsprozesses gemäß einer Ausführungsform. Das System 100 kann eine Eingabeeinrichtung 110 aufweisen, welche Produktionsdaten empfängt. Diese Produktionsdaten können beispielsweise von einer externen Vorrichtung 200 bereitgestellt werden, welche zuvor eine Planung des Produktionsablaufs ausgeführt hat. Während dieser manuellen oder automatischen Planung des Produktionsablaufs können dabei Produktionsdaten generiert werden, welche Informationen umfassen, die auch Operationen zum Greifen von Komponenten durch einen Roboterarm 30 während des Produktionsprozesses beschreiben. Derartige Operationen können beispielsweise das Aufnehmen eines oder mehrerer Ausgangsprodukte zu Beginn des Prozesses, Erfordernisse für ein Umgreifen einer Komponente durch den Roboterarm 30 oder ein Ablegen einer Komponente bzw. des fertigen Produktes umfassen. Ferner sind auch Angaben zu Greifposen möglich. Solche Angaben zu Greifposen können spezifizieren, in welcher Weise eine Komponente durch den Roboter bzw. Roboterarm 30 gegriffen werden soll. Hieraus können sich beispielsweise Anforderungen für die räumliche Position und/oder die Ausgestaltung der Aufnahmen 11-13 ergeben. Darüber hinaus sind auch beliebige andere Operationen in Zusammenhang mit einem Greifen von Komponenten durch den Roboterarm 30 möglich.

Die empfangenen Produktionsdaten können daraufhin einer Verarbeitungseinrichtung 120 bereitgestellt werden. Diese Verarbeitungseinrichtung 120 kann die Produktionsdaten analysieren und Vorgänge identifizieren, bei welchen eine Komponente 20 durch einen Roboterarm 30 aufgenommen oder abgelegt werden soll. In diesen Fällen des Aufnehmens bzw. Ablegens einer Komponente 20 sind für den Produktionsablauf die zuvor erwähnte Aufnahmen 11 bis 13 erforderlich. Die Verarbeitungseinrichtung 120 kann insbesondere aus den Produktionsdaten Angaben extrahieren, welche die erforderliche Ausrichtung der jeweiligen Komponente 20, geeignete Griffpositionen durch den Roboterarm 30 sowie gegebenenfalls weitere Vorgaben bzw. Anforderungen spezifizieren. Diese Angaben können sowohl Angaben spezifizieren, die aus einer abzulegen Komponente 20 herrühren als auch Angaben, die das Aufnehmen der Komponente 20 für einen nachfolgenden Produktionsschritt beschreiben.

Ausgehend aus diesen Angaben über die Erfordernisse zum Ablegen bzw. Aufnehmen einer Komponente 20 an einer Aufnahme 11 bis 13 kann die Verarbeitungseinrichtung 120 daraufhin eine funktionelle Beschreibung für die jeweilige Aufnahme 11 bis 13 erstellen. Diese funktionelle Beschreibung kann grundsätzlich beliebige Informationen umfassen, die zur Spezifikation der Eigenschaften einer solchen Aufnahme 11 bis 13 genutzt werden können.

Beispielsweise kann die funktionelle Beschreibung einer Aufnahme 11 bis 13 spezifizieren, ob es sich bei der jeweiligen Aufnahme 11 bis 13 um eine Aufnahme 11 handeln soll, die eine Komponente 20 zu Beginn des Produktionsprozesses an einer vorbestimmten räumlichen Position und/oder in einer vorbestimmten Ausrichtung bzw. Stellung bereitstellen soll. Ferner sind beispielsweise funktionelle Beschreibungen zu Aufnahmen 13 möglich, die eine Komponente oder ein fertiges Produkt am Ende eines Verarbeitungsschrittes an einer vorbestimmten räumlichen Position und/oder in einer vorgegebenen Stellung aufnehmen soll, um die Komponente bzw. das Produkt für eine Weiterverarbeitung bereitzustellen.

Ferner kann die funktionelle Beschreibung auch Angaben zu Aufnahmen 12 umfassen, in denen während des Produktionsablaufs eine Komponente 20 zunächst abgelegt und anschließend wieder aufgenommen werden soll. Solche Aufnahmen 12 können beispielsweise dazu genutzt werden, um ein Umgreifen eines Roboterarms 30 zu ermöglichen. Hierbei kann zum Beispiel eine Komponente 20 in einer solchen Aufnahme 12 zunächst durch den Roboterarm 30 mit einer ersten Griffposition abgelegt werden. Anschließend kann derselbe Roboterarm 30 oder ein anderer Roboterarm die Komponente erneut greifen. Insbesondere ist es aber auch möglich, dass bei dem erneuten Greifen der Komponente 20 die Komponente 20 an anderen Außenseiten gegriffen wird, als dies beim Ablegen der Komponente 20 in der Aufnahme 12 der Fall war.

Darüber hinaus kann die funktionelle Beschreibung für eine Aufnahme 11 bis 13 auch Spezifikationen für eine Aufnahme umfassen, die es ermöglicht die Präzision der Griffposition zu erhöhen. Beispielsweise kann eine zuvor gegebenenfalls sehr ungenau durch den Roboterarm 30 aufgenommene Komponente 20 in einer solchen Aufnahme 11 bis 13 abgelegt werden. Dabei kann die Aufnahme 11 bis 13 zum Beispiel derart ausgeführt sein, dass die abgelegte Komponente 20 sich automatisch sehr präzise an eine genau vorgegebenen Position bewegt. Dies kann beispielsweise durch schräge Flächen erreicht werden, sodass die Komponente 20 aufgrund der Schwerkraft an eine genau definierte Position rutscht. Selbst verständlich sind auch beliebige andere Lösungen zur genauen Positionierung eine Komponente 20 in einer Aufnahmen 11 bis 13 möglich. Anschließend kann der Roboterarm 30 eine solche ausgerichtete Komponente mit hoher Präzision aufnehmen und weiteren Verarbeitungsschritten zuführen.

Darüber hinaus sind auch funktionelle Beschreibungen für Aufnahmen 11 bis 13 möglich, bei welchen eine Komponente 20 an einer vorbestimmten Position und/oder mit einer vorbestimmten Stellung bzw. Ausrichtung aufgenommen wird. Zum Beispiel kann die Komponente 20 in einer solchen Aufnahme 11 bis 13 bearbeitet werden, bevor sie in einem weiteren Prozessschritt durch einen Roboterarm 30 wieder aufgenommen wird. Eine solche Bearbeitung kann beispielsweise ein Bohren von Löchern, ein Schleifen, Fräsen oder eine beliebige andere Operation umfassen.

Neben den zuvor genannten Spezifikationen für Aufnahmen 11 bis 13 mit unterschiedlichen Grundfunktionen können die funktionellen Beschreibungen der Aufnahmen 11 bis 13 auch beliebige weitere geeignete Angaben umfassen, die die jeweiligen Aufnahmen 11 bis 13 charakterisieren. Beispielsweise können die funktionellen Beschreibungen auch Angaben umfassen, welche ein minimal zu tragendes Gewicht durch die jeweilige Aufnahme 11 bis 13 spezifizieren, um dem Gewicht der durch die jeweilige Haltung 11 bis 13 aufzunehmen Komponente 20 Rechnung zu tragen. Ferner können beispielsweise die funktionellen Beschreibungen auch Angaben über eine minimale und/oder maximale Haltekraft durch die jeweilige Aufnahme 11 bis 13 umfassen, Angaben über minimale und/oder maximale Abmessungen der jeweiligen Aufnahme 11 bis 13, Oberflächeneigenschaften, um beispielsweise die aufzunehmende Komponente 20 nicht zu beschädigen, oder beliebige andere geeignete Angaben für funktionelle Beschreibungen.

Die durch die Verarbeitungseinrichtung 120 ermittelten funktionellen Beschreibungen für eine Aufnahme 11 bis 13 einer Komponente 20 können daraufhin auf beliebige Weise ausgegeben werden. Beispielsweise könne die ermittelten funktionellen Beschreibungen einem Benutzer angezeigt werden, sodass der Benutzer auf Grundlage der angezeigten funktionellen Beschreibungen eine manuelle Konstruktion der jeweiligen Aufnahmen 11 bis 13 durchführen kann. Gegebenenfalls können die funktionellen Beschreibungen auch zunächst in einem Speicher abgespeichert werden. Insbesondere können die ermittelten funktionellen Beschreibungen für die Aufnahmen 11 bis 13 zusammen mit den korrespondierenden Produktionsdaten abgespeichert werden. Hierzu kann entweder eine Datei erstellt werden, welches sowohl Produktionsdaten als auch die funktionellen Beschreibungen umfasst, oder alternativ können die funktionellen Beschreibungen in einer separaten Datei abgespeichert werden, welche auf beliebige Weise mit den Produktionsdaten verknüpft ist.

Zur Ermittlung der funktionellen Beschreibungen kann die Verarbeitungseinrichtung 120 beispielsweise zunächst aus den empfangenen Produktionsdaten Vorgaben bzw. Anforderungen extrahieren oder ableiten. Ausgehend von diesen Anforderungen kann die Verarbeitungseinrichtung 120 die funktionellen Beschreibungen ermitteln. Hierzu ist es beispielsweise auch möglich, dass in einer Speichereinrichtung 140 bereits mehrere funktionellen Beschreibungen von Aufnahmen abgespeichert sind. In diesem Fall kann die Verarbeitungseinrichtung 120 die Daten aus der Speichereinrichtung 140 auslesen und aus den ausgelesenen Daten funktionelle Beschreibungen auswählen, die den Anforderungen gemäß den Produktionsdaten entsprechen. Diese Weise können beispielsweise funktionelle Beschreibungen bereitgestellt werden, welche auch zu bereits verfügbaren Aufnahmen korrespondieren oder zumindest zu Aufnahmen, zu welchen gegebenenfalls bereits Konstruktionsdaten verfügbar sind. Hierdurch kann einerseits die Ermittlung der erforderlichen funktionellen Beschreibungen vereinfacht werden und andererseits können die ausgegebenen funktionelle Beschreibung standardisierten Aufnahmen entsprechen, sodass auch die nachfolgenden Schritte zur Herstellung bzw. Beschaffung der Aufnahmen vereinfacht werden können.

Gegebenenfalls ist es auch möglich, dass die Verarbeitungseinrichtung 120 auf Grundlage der ermittelten funktionellen Beschreibungen Konstruktionsdaten für die jeweiligen Aufnahmen 11 bis 13 generiert. Hierzu können beispielsweise aus der Speichereinrichtung 140 bereits zuvor erstellte Konstruktionsdaten ausgelesen und bereitgestellt werden, die den Anforderungen der funktionellen Beschreibungen entsprechen. Darüber hinaus sind auch beliebige weitere Ansätze zur ganz oder zumindest teilweise automatisierten Erstellung von Konstruktionsdaten auf Grundlage der funktionellen Beschreibungen möglich. Insbesondere können auch Ansätze auf Grundlage von Künstliche Intelligenz oder ähnlichem angewendet werden.

Neben einer rein manuellen Weiterverarbeitung der ermittelten funktionellen Beschreibungen für die Aufnahme 11 bis 13 kann die weitere Konstruktion und/oder Fertigung der entsprechend Aufnahmen auch vollständig oder zumindest teilweise automatisiert werden.

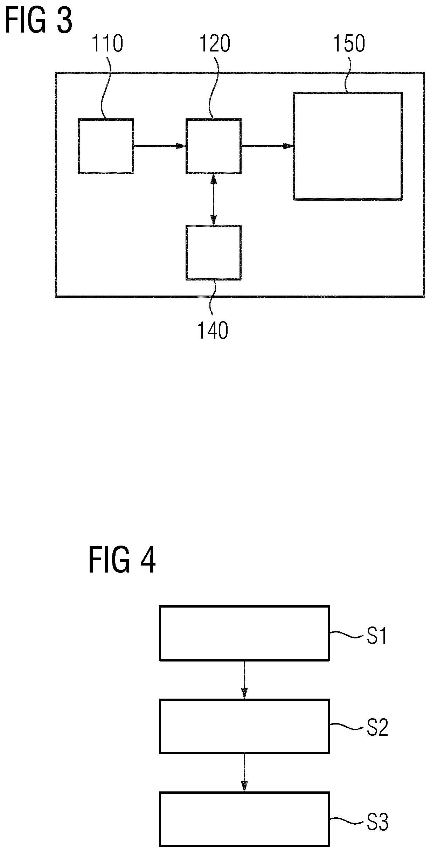

Figur 3 zeigt beispielsweise eine schematische Darstellung eines Blockschaubildes eines Systems 100 zur Konzeption eines Produktionsprozesses gemäß einer weiteren Ausführungsform. Das in Figur 3 dargestellte System 100 entspricht dabei weitestgehend dem zuvor bereits in Zusammenhang mit Figur 2 beschriebenen System. Darüber hinaus umfasst das in Figur 3 dargestellte System eine Fertigungseinrichtung 150. Diese Fertigungseinrichtung 150 kann die von der Verarbeitungseinrichtung 120 ermittelten funktionellen Beschreibungen empfangen und auf Grundlage der empfangenen funktionellen Beschreibungen oder gegebenenfalls auf Grundlage der unter Verwendung der funktionellen Beschreibungen generierten Konstruktionsdaten eine geeignete Aufnahme 11 bis 13 fertigen.

Beispielsweise können in der Fertigungseinrichtung 150 auf Grundlage der empfangenen funktionellen Beschreibungen oder der bereits erstellten Konstruktionsdaten automatisiert Aufnahmen 11 bis 13 gefertigt werden, die den jeweiligen Anforderungen entsprechen. Dies kann beispielsweise mittels eines dreidimensionalen Druckverfahrens erfolgen. Hierzu kann die Fertigungseinrichtung 150 einen entsprechenden geeigneten 3D-Drucker umfassen. Grundsätzlich sind hierzu je nach Anwendungsfall beliebige geeignete 3D-Drucksysteme und Technologien möglich.

Alternativ ist es auch möglich, die erforderlichen Aufnahmen 11 bis 13 durch beliebige andere geeignete Technologien zu fertigen. Zum Beispiel kann eine Aufnahme 11 bis 13 auch mittels einer CNC-Maschine, beispielsweise einer CNC-Fräse, oder eines beliebigen anderen computergestützten Verfahren hergestellt werden. Auf diese Weise kann ausgehend von den bereitgestellten Produktionsdaten automatisiert eine geeignete Aufnahme 11 bis 13 für den Produktionsprozess hergestellt werden.

Figur 4 zeigt ein Ablaufdiagramm, wie es einem Verfahren zur Konzeption eines Produktionsprozesses gemäß einer Ausführungsform zugrunde liegt. Das Verfahren kann grundsätzlich beliebige Verfahrensschritte umfassen, die zur Realisierung des zuvor beschriebenen Systems geeignet sind. Analog können auch die zuvor beschriebenen Systeme beliebige Komponenten umfassen, die zur Implementierung der nachfolgend beschriebenen Verfahrensschritte geeignet sind.

Bei dem beschriebenen Verfahren zur Konzeption eines Produktionsprozesses kann mindestens eine Komponente mittels eines Roboters bzw. Roboterarm 30 bewegt werden. Das Verfahren umfasst einen Schritt S1 zum Empfangen von Produktionsdaten. Diese Produktionsdaten können einen Produktionsablauf spezifizieren. Insbesondere können die Produktionsdaten Informationen umfassen, die ein Greifen von Komponenten 20 durch den Roboter bzw. Roboterarm 30 während des Produktionsprozesses beschreiben.

In einem Schritt S2 erfolgt ein Ermitteln einer funktionellen Beschreibung für eine Aufnahme 11 bis 13 einer Komponente 20. Das Ermitteln der funktionellen Beschreibung erfolgt insbesondere unter Verwendung der empfangenen Produktionsdaten.

In Schritt S3 werden die ermittelten funktionelle Beschreibung für die Aufnahmen 11 bis 13 einer Komponente 20 ausgegeben.

Das Verfahren kann ferner einen Schritt zum Auswählen von aus zuvor abgespeicherten Spezifikationen für Aufnahmen von Komponente umfassen. Das Auswählen kann insbesondere unter Verwendung der ermittelten funktionellen Beschreibung für die Aufnahmen einer Komponente erfolgen.

Ferner kann das Verfahren einem Schritt zum Ermitteln mindestens einer Aufnahme für eine Komponente umfassen, wobei die ermittelte Aufnahme den Anforderungen der ermittelten funktionellen Beschreibung der Aufnahme einer Komponente entspricht.

Insbesondere kann das Ermitteln der mindestens einer Aufnahme für eine Komponente unter Verwendung von zuvor abgespeicherten Daten für Aufnahmen von Komponenten erfolgen.

Ferner kann das Verfahren einen Schritt zum automatischen Generieren von Herstellungsanweisungen für die Aufnahme einer Komponente umfassen. Dabei kann das automatische Generieren der Herstellungsanweisungen unter Verwendung der ermittelten funktionellen Beschreibung der Aufnahme erfolgen.

Schließlich kann das Verfahren einen einem Schritt Herstellen der Aufnahmen 11 bis 13 für eine Komponente 20 umfassen. Das Herstellen derartiger Aufnahmen 11 bis 13 kann insbesondere unter Verwendung der ermittelten funktionellen Beschreibung für die Aufnahmen 11 bis 13 einer Komponente 20 und/oder der Spezifikation für die Aufnahmen 11 bis 13 einer Komponente 20 erfolgen.

Zusammenfasst betrifft die vorliegende Erfindung eine automatische Erstellung von funktionellen Beschreibungen für Aufnahmeelemente eines Produktionsprozesses, in welchem ein Roboterarm einzelne Komponenten greifen und ablegen kann. Die funktionellen Beschreibungen werden hierbei automatisiert unter Verwendung von zuvor generierten Prozessbeschreibungen erstellt. Insbesondere können die Aufnahmeelemente auf Grundlage der erstellten Beschreibungen automatisiert hergestellt werden.

## Patentansprüche

1. System (100) zur Konzeption eines Produktionsprozesses bei welchem mindestens eine Komponente (20) mittels eines Roboters (30) bewegt wird, mit:
einer Eingabeeinrichtung (110), die dazu ausgelegt ist, Produktionsdaten zu empfangen, die einen Produktionsablauf spezifizieren, wobei die Produktionsdaten Informationen umfassen, die ein Greifen von Komponenten durch den Roboter (30) während des Produktionsprozesses beschreiben;
eine Verarbeitungseinrichtung (120), die dazu ausgelegt ist, unter Verwendung der Produktionsdaten eine funktionelle Beschreibung für eine Aufnahme (11-13) der Komponente (20) zu ermitteln und die ermittelte funktionelle Beschreibung für die Aufnahme (11-13) der Komponente (20) auszugeben.

2. System (100) nach Anspruch 1, wobei die funktionelle Beschreibung für die Aufnahme (11-13) der Komponente (20) eine Beschreibung für eine Aufnahme (12) zum Umgreifen einer Komponente (20) durch den Roboter (30), für eine Aufnahme (12) zur Anpassung der Position der Komponente (20), für eine Aufnahme (11-13) zum Halten der Komponente (20) an einer vordefinierten Position, und/oder für eine Aufnahme (11-13) zum Halten der Komponente (20) in einer vordefinierten Stellung umfasst.

3. System (100) nach Anspruch 1 oder 2, wobei die Verarbeitungseinrichtung (120) dazu ausgelegt ist, die funktionelle Beschreibung für die Aufnahme (11-13) der Komponente (20) zusammen mit den empfangenen Produktionsdaten einem Benutzer bereitzustellen.

4. System (100) nach einem der Ansprüche 1 bis 3, wobei die Verarbeitungseinrichtung (120) ferner dazu ausgelegt ist, unter Verwendung der Produktionsdaten eine räumliche Position für die Aufnahme (11-13) der Komponente (20) zu ermitteln.

5. System (100) nach einem der Ansprüche 1 bis 4, mit einer Speichereinrichtung (140), die dazu ausgelegt ist, Spezifikationen für die Aufnahmen (11-13) von Komponenten (20) zu speichern und bereitzustellen,
wobei die Verarbeitungseinrichtung (120) dazu ausgelegt ist, die in der Speichereinrichtung (140) gespeicherten Spezifikationen auszulesen und eine Spezifikation für die Aufnahme (11-13) der Komponente (20) auszuwählen, die Anforderungen der ermittelten funktionellen Beschreibung für die Aufnahme (11-13) der Komponente (20) entspricht.

6. System (100) nach einem der Ansprüche 1 bis 5, wobei die Verarbeitungseinrichtung (120) dazu ausgelegt ist, unter Verwendung der ermittelten funktionellen Beschreibung für die Aufnahme (11-13) der Komponente (20) Konstruktionsdaten zur Herstellung der entsprechenden Aufnahme (11-13) zu generieren.

7. System (100) nach einem der Ansprüche 1 bis 6, mit einer Ausgabeschnittstelle, die dazu ausgelegt ist, die ermittelte funktionelle Beschreibung für die Aufnahme (11-13) der Komponente (20) und/oder der generierten Konstruktionsdaten zur Herstellung der entsprechenden Aufnahme (11-13) auszugeben.

8. System (100) nach einem der Ansprüche 1 bis 7, mit einer Fertigungseinrichtung (150), die dazu ausgelegt ist, unter Verwendung der ermittelten funktionellen Beschreibung für die Aufnahme (11-13) der Komponente (20) und/oder der generierten Konstruktionsdaten zur Herstellung der entsprechenden Aufnahme (11-13) eine Aufnahme (11-13) der Komponente (20) zu fertigen.

9. System (100) nach Anspruch 8, wobei die Fertigungseinrichtung (150) einen 3D-Drucker und/oder eine CNC-Maschine umfasst.

10. Verfahren zur Konzeption eines Produktionsprozesses bei welchem mindestens eine Komponente (20) mittels eines Roboters (30) bewegt wird, wobei das Verfahren die folgenden Schritte umfasst:
Empfangen (S1) von Produktionsdaten, die einen Produktionsablauf spezifizieren, wobei die Produktionsdaten Informationen umfassen, die ein Greifen von Komponenten (20) durch den Roboter (30) während des Produktionsprozesses beschreiben;
Ermitteln (S2) einer funktionellen Beschreibung für eine Aufnahme (11-13) der Komponente (20) unter Verwendung der Produktionsdaten; und
Ausgeben (S3) der ermittelten funktionellen Beschreibung für die Aufnahme (11-13) der Komponente (20).

11. Verfahren nach Anspruch 10, mit einem Schritt zum Auswählen von aus zuvor abgespeicherten Spezifikationen für die Aufnahme (11-13) der Komponente (20) unter Verwendung der ermittelten funktionellen Beschreibung für die Aufnahme (11-13) der Komponente (20).

12. Verfahren nach Anspruch 10 oder 11, mit einem Schritt zum Ermitteln mindestens einer Aufnahme (11-13) für die Komponente (20), welche den Anforderungen der ermittelten funktionalen Beschreibung dir die Aufnahme (11-13) der Komponente (20) entspricht.

13. Verfahren nach Anspruch 12, wobei das Ermitteln der mindestens einer Aufnahme (11-13) für die Komponente (20) unter Verwendung von zuvor abgespeicherten Daten für Aufnahmen (11-13) der Komponente (20) erfolgt.

14. Verfahren nach einem der Ansprüche 10 bis 13, mit einem Schritt zum automatischen Generieren von Herstellungsanweisungen für die Aufnahme (11-13) der Komponente (20), wobei das automatische Generieren der Herstellungsanweisungen unter Verwendung der ermittelten funktionalen Beschreibung der Aufnahme (11-13) der Komponente (20) erfolgt.

15. Verfahren nach Anspruch 14, mit einem Schritt zum Herstellen der Aufnahme (11-13) für die Komponente (20) unter Verwendung der ermittelten funktionellen Beschreibung für die Aufnahme (11-13) der Komponente (20) und/oder der Spezifikation für die Aufnahme (11-13) der Komponente (20).
